# EUROPEAN PATENT APPLICATION

(11) **EP 2 661 996 A1**
(43) Date of publication of application: **13.11.2013**
(21) Application number: 13152819.2
(22) Date of filing: 28.01.2013
(51) Int. Cl.: A47J 31/40, A47J 31/44

(54) **Vending machine for preparing beverages and method for operating said vending machine**

(30) Priority: 07.05.2012 IT MI20120758
(71) Applicant: F.A.S. International S.p.A., 36015 Schio (Vicenza) (IT)
(72) Inventor: Dall'Alba, Gianfranco, 36015 Schio (VI) (IT)
(74) Representative: Bonvicini, Davide

(57) **Abstract**

A vending machine (1) for preparing beverages, comprising a storage container (3) for brewing and/or mixing powders, powder dispensing means (4), sensor means (10) for detecting a product identifier (ID) and a product amount (Q), data storage means (11) for storing a plurality of reference product identifiers (IDn), control means (12) for controlling actuation of the dispensing means (4). The control means (12) are configured to receive a product identifier (ID) and an associated product amount (Q) as detected by the sensor means (10) from a package of brewing and/or mixing powder, comparing the detected product identifier (ID) with the reference product identifiers (IDn), calculating a maximum number of dispensing operations (Nmax), determining a threshold number of dispensing operations (Nth), preventing actuation of the dispensing means (4) as soon as a number of actuation cycles reaches the threshold number of dispensing operations (Nth).

## Description

The present invention relates to a vending machine and a method of operating said vending machine.

Particularly, the present invention relates to a vending machine for preparing hot beverages, such as tea, coffee, chocolate, cappuccino and the like.

Prior art vending machines are disclosed, for instance in WO 2011/139151, GB 2 429 694, WO 00/78188, EP 2 123 201.

"Branded" vending machines, i.e. vending machines bearing the trademark of a supplier advertised outside the vending machine itself, have been in the market for some years. This practice of advertising brands on hot beverage vending machines is well established among coffee manufacturers but suffers from certain drawbacks.

On the one hand, manufacturers want to ensure that the vending machines that bear their trademark only use powder packages, possibly containing coffee powder, but also chocolate and cappuccino powder, that bear their trademark, both for obvious commercial reasons and to ensure that the consumer is offered a high-quality product, matching up with its image. On the other hand, those who manage such vending machines will often order a first batch of powder packages from the manufacturer and use cheap brands, or brands not belonging to the manufacturer advertised on the vending machines for refills, to save money, which will obviously cause economic losses and image damages to the manufacturer. In certain cases, managers may even order original refills from the manufacturer, and still refill the vending machine with unbranded products, which are cheaper than those of the relevant brand, to resell the branded packages they purchased, still closed, thereby making illegal and fraudulent profits thereon.

In view of the foregoing, there arises the need to ensure that a beverage vending machine only uses predetermined powder packages, by disabling operation when it is otherwise.

Therefore, the object of the present invention is to provide a vending machine and a method of operating a vending machine that have such structural and functional features as to fulfill the above needs, while obviating the drawbacks of the prior art.

This object is fulfilled by a vending machine as defined in claim 1.

This object is also fulfilled by a method of operating a vending machine as defined in claim 5.

Further features and advantages of the vending machine and method of operating a vending machine according to the present invention will be apparent from the following description of one preferred embodiment thereof, which is given by way of illustration and without limitation with reference to the accompanying figures, in which:

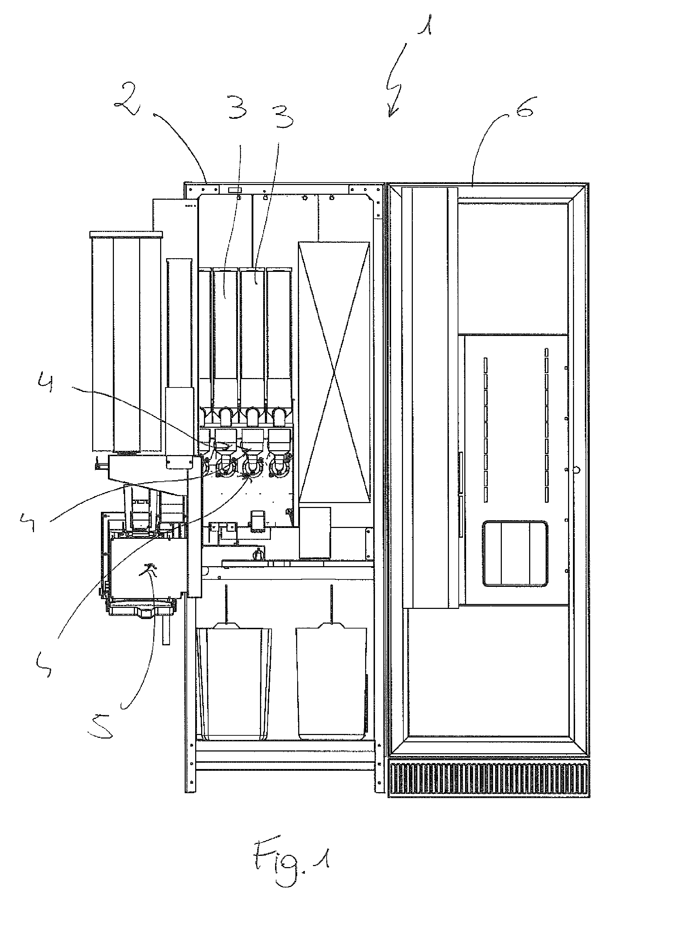

- Figure 1 shows a vending machine of the present invention, which is adapted to operate with the method of the present invention,

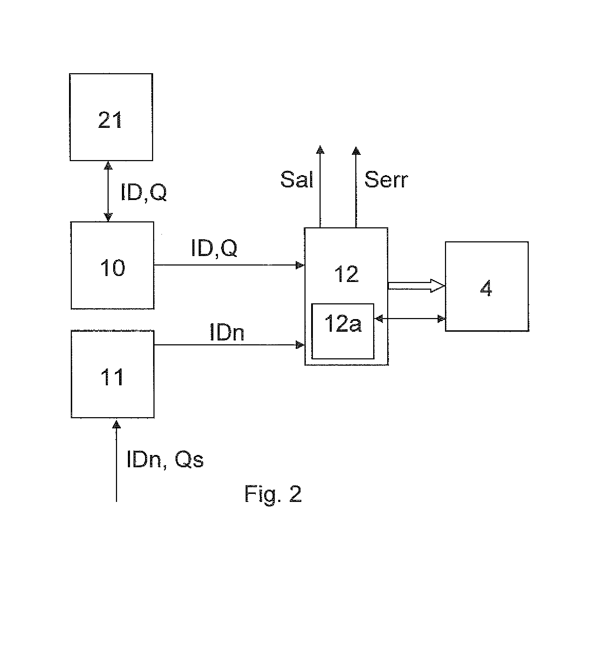

- Figure 2 shows a data-flow diagram of the method of the present invention,
- Figures 3a and 3b show examples of beverage powder packages for use in the vending machine of Figure 1, using the method of the present invention.

Referring to the figures, numeral 1 designates a vending machine of the present invention.

The vending machine 1 comprises a frame 2 defining a volume that can accommodate the internal components required for operation of the vending machine 1. Such frame 2 is typically closed by a front door 6, which is typically only opened for maintenance and/or refilling.

The frame 2 also has the partially external components mounted thereto, such as the devices required for beverage selection by the user and cash or electronic payment systems. Such components are generally controlled by an electronic control board.

At least one storage container is placed in the frame 2, which contains brewing and/or mixing powders 3 and powder dispensing means 4 connected to the storage container 3.

One example of brewing powder is ground coffee, which is used for coffee preparation, and one example of mixing powder is powdered milk or chocolate.

The dispensing means 4 are able to dispense, at each dispensing operation, doses of a preset amount Qs of the powder contained in the storage container 3.

Particularly, the dispensing means 4 are designed to dispense the powder doses to a percolation/mixing device 5, which is adapted to prepare and dispense a hot beverage.

The vending machine 1 also comprises sensor means 10 for detecting, from a brewing and/or mixing powder package 20, a product identifier ID and a product amount Q associated with the product identifier ID.

Advantageously, the sensor means 10 are contactless type, for easy data retrieval.

In one embodiment, the sensor means 10 include a RFID reader, adapted to detect the codes ID, Q contained in a RFID tag 21.

Therefore, powder packages 20 with a RFID tag 21 may be provided. The RFID tag 21 of each powder package 20 will have stored therein a product identifier ID and the amount Q of product associated with the product identifier ID and corresponding to the product amount contained in the powder package 20, e.g. during a packaging step.

The product identifier ID may include the manufacturer's data and the production lot of the powder package, or only the manufacturer's identifier or any identifier that can uniquely define the origin of the product and, advantageously, the amount of product contained in the package from which such product identifier ID is detected.

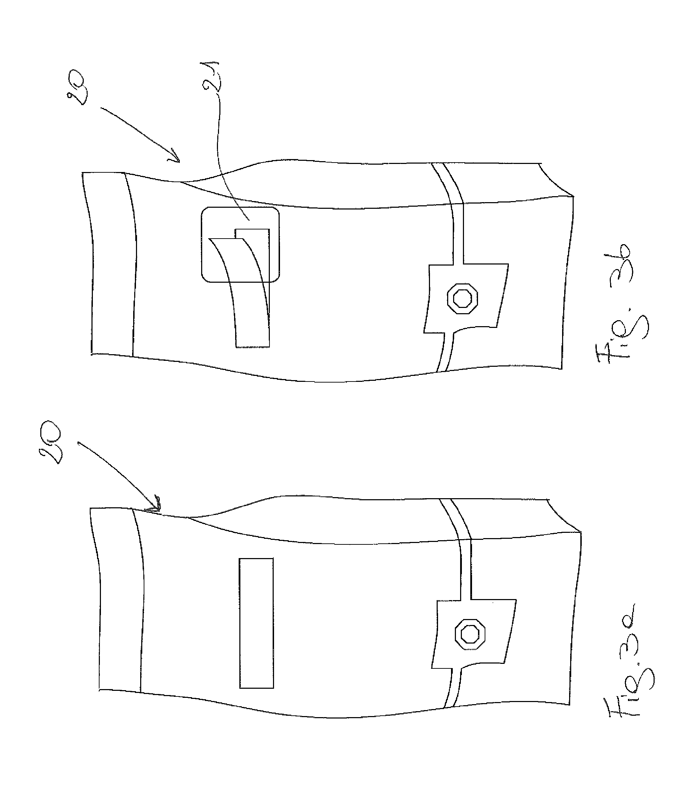

Advantageously, the RFID tag 21 may be inserted in the powder package 20 (Fig. 3a), such that the operator is forced to open the package 20 to allow the sensor means 10 to read the RFID tag 21. Thus, the package 20 will be equipped with elements that can prevent activation of the RFID tag 21 and hence reading of the RFID tag 20 and the identifiers stored therein, when the package 20 is closed. Therefore, the operator that refills the vending machine will forcibly open the package 20 to allow reading of the RFID tag and, as explained hereinafter, to enable the dispensing means 4. This will prevent any fraudulent resale of branded packages by vending machine managers.

Alternatively, the RFID tag 21 may be located outside the package 20 (Fig. 3b).

Advantageously, the RFID tag 21 is a disposable tag such that, once the RFID tag 21 has been activated by the sensor means 10 for reading the identifiers stored therein, it can no longer be reused.

The vending machine 1 also comprises data storage means 11 for storing a plurality of reference product identifiers IDn. Like the product identifiers ID associated with the powder packages 20, the reference product identifiers IDn may include the manufacturer and production lot identifier data or simply the manufacturer identifier or any identifier that can uniquely define the origin of the product.

According to one embodiment, the reference product identifiers IDn are stored in the data storage means 11 and are advantageously updated by a maintenance operator for the vending machine 1, who may access the data storage means 11 using an authentication device 11 and exchange data with such data storage means 11.

Alternatively, the vending machine 1 may include communication means (not shown), such as a modem, which are designed for remote reception of the data to be stored into the data storage means 11. For example, such data may be transmitted to the vending machine 1 by the manufacturer of the powder packages 20 that are required to be exclusively used in the vending machine 1 or by the provider of the vending machine 1, who receives data from the manufacturer of the packages 20.

Advantageously, the data storage means 11 are adapted to store the value of a preset amount Qs of powder, which is designed to be dispensed by the dispensing means 4 at each dispensing operation.

The vending machine 1 further comprises control means 12 coupled to the dispensing means 4, the sensor means 10 and the data storage means 11, and adapted to control the actuation of the dispensing means 4.

In one embodiment, the control means 12 and the data storage means 11 are associated with the electronic control board, that manages the functions of the vending machine and interfaces with the beverage selection devices and the payment systems.

The control means 12 are configured for:
- receiving a product identifier ID and an associated product amount Q, detected by the sensor means 10 from a brewing and/or mixing powder package 20,
- comparing the detected product identifier ID with the product identifiers IDn stored in the data storage means 11, to check whether the detected product identifier ID matches one of the stored product identifiers IDn,
- calculating a maximum number of dispensing operations Nmax, as a function of the product amount Q associated with the detected product identifier ID and the preset dispensable amount for each dispensing operation Qs,
- determining a threshold number of dispensing operations Nth smaller than or equal to the maximum number of dispensing operations Nmax,
- preventing actuation of the dispensing means 4 as soon as the number of actuation cycles of the dispensing means 4 reaches the threshold number of dispensing operations Nth.

By this arrangement, a powder package manufacturer may be sure that the vending machine 1 only uses powder packages 20 from such manufacturer. The manufacturer may only store product identifiers IDn authorized by the manufacturer into the data storage means 11.

Furthermore, upon knowledge of the product amount Q associated with the detected product identifier ID, the preset amount Qs designed to be dispensed at each dispensing operation and the number of dispensing operations performed from the last detection of a product identifier ID validly recognized by the control means 12, the vending machine 1 of the present invention provides real-time knowledge of the residual amount of powder product in the storage container 3. Particularly, in one embodiment, the control means 12 are adapted to generate an alarm signal Sal as soon as the number of dispensing operations reaches the threshold number of operations Nth or a fraction thereof.

For this purpose, the control means 12 include a counter device 12a which is able to reset a counter upon detection by the sensor means 10 of a product identifier ID validly recognized by said control means 12 and to count the number of actuation cycles of the dispensing means 4.

Whenever an operator wants to refill the powder storage container 3, he/she must have a new powder package 20 with a RFID tag 21.

The RFID lag 21 of the package 20 has stored therein the product identifier ID and the product amount Q associated with the product identifier ID and representative of t the amount of powder contained in the package 20.

The operator causes the sensor means 10 to read the RFID tag 21, detect the product identifier ID and the product amount Q and send such data to the control means 12.

The control means 12 compare the detected product identifier ID with the product identifiers IDn stored in the data storage means 11, to check whether the detected product identifier ID matches one of the stored product identifiers IDn,

If the check has a negative result, i.e. if the detected product identifier ID does not match any one of the stored product identifiers IDn, the control means 12 will prevent actuation of the dispensing means 4 and advantageously generate an error signal Serr, which can be used, for instance, by the control electronics of the vending machine 1, to stop operation of the vending machine 1 or block a dispenser 4. For this purpose, a plurality of sensor means 10 may be provided, each associated with a particular dispenser 4, for enabling/disabling individual dispensers 4.

If the check has a positive result, i.e. if the detected product identifier ID matches one of the stored product identifiers IDn, then the detected product identifier ID and hence the package 20 are validly recognized and the dispensing means 4 are enabled to dispense the powder contained in the storage container 3.

In order that, once the powder in the storage container 3 has run out, an operator can be prevented from refilling the storage container 3 with the powder of a package from another manufacturer, the control means 12 will calculate a maximum number of dispensing operations Nmax, according to the amount Q of product associated with the detected product identifier ID and the preset amount Qs designed to be dispensed by the dispensing means 4 at each dispensing operation.

Then the control means 12 will set a threshold number of dispensing operations Nth equal to, or advantageously smaller than the maximum number of dispensing operations Nmax. Such setting may be user programmable.

Therefore, the control means 12 control actuation of the dispensing means 4 and prevent actuation of the dispensing means 4 as soon as a number of actuation cycles of the dispensing means 4 reaches the threshold number of dispensing operations Nth.

It will be appreciated from the foregoing that the vending machine and the method of operating the vending machine of the present invention obviate the above mentioned prior art drawbacks.

Those skilled in the art will obviously appreciate that a number of changes and variants may be made to the invention as described hereinbefore to meet specific needs, without departure from the scope of the invention, as defined in the following claims.

## Claims

1. A vending machine (1) for preparing beverages, comprising:
- a storage container (3) for brewing and/or mixing powders,
- powder dispensing means (4) for dispensing, at each dispensing operation, a preset amount (Qs) of powder contained in said storage container (3),
- sensor means (10) for detecting, from a brewing and/or mixing powder package (20), a product identifier (ID) and a product amount (Q) associated with said product identifier (ID) and representative of the amount of powder contained in said powder package (20),
- data storage means (11) for storing a plurality of reference product identifiers (IDn),
- control means (12) coupled to said dispensing means (4), said sensor means (10) and said data storage means (11), and adapted to control the actuation of said dispensing means (4),
wherein said control means (12) are configured to:
- receive a product identifier (ID) and an associated product amount (Q), as detected by the sensor means (10),
- compare the detected product identifier (ID) with the product identifiers (IDn) stored in the data storage means (11), to check whether the detected product identifier (ID) matches one of the stored product identifiers (IDn),
- calculate a maximum number of dispensing operations (Nmax), as a function of the product amount (Q) associated with the detected product identifier (ID) and the preset dispensable amount for each dispensing operation (Qs),
- determine a threshold number of dispensing operations (Nth) smaller than or equal to said maximum number of dispensing operations (Nmax),
- prevent actuation of said dispensing means (4) as soon as the number of actuation cycles of said dispensing means (4) reaches said threshold number of dispensing operations (Nth).

2. A vending machine (1) as claimed in claim 1, wherein said sensor means (10) include a RFID reader, adapted to detect the codes (ID, Q) contained in a RFID tag (21).

3. A vending machine (1) as claimed in claim 1 or 2, wherein said control means (12) include a counter device (12a) which is adapted to reset a counter upon detection by the sensor means (10) of a product identifier (ID) validly checked by said control means (12) and to count the number of actuation cycles of the dispensing means (4).

4. A vending machine (1) as claimed in claim 3, wherein said control means (12) are adapted to generate an alarm signal when the number of actuation cycles of said dispensing means (4) is smaller than or equal to said threshold number of dispensing operations (Nth).

5. A method of operation of a vending machine (1) for preparing beverages, said vending machine (1) comprising:
- a storage container (3) for brewing and/or mixing powders,
- powder dispensing means (4) for dispensing, at each dispensing operation, a preset amount (Qs) of powder, contained in said storage container (3),
- sensor means (10) for detecting, from a brewing and/or mixing powder package (20), a product identifier (ID) and a product amount (Q) associated with said product identifier (ID),
- data storage means (11) for storing a plurality of reference product identifiers (IDn),
- control means (12) coupled to said dispensing means (4), said sensor means (10) and said data storage means (11), and adapted to control the actuation of said dispensing means (4),
said method comprising the steps of
- detecting a product identifier (ID) and an associated product amount (Q), from a brewing and/or mixing powder package (20),
- comparing the detected product identifier (ID) with the product identifiers (IDn) stored in the data storage means (11), to check whether the detected product identifier (ID) matches one of the stored product identifiers (IDn),
- calculating a maximum number of dispensing operations (Nmax), as a function of the product amount (Q) associated with the detected product identifier (ID) and the preset dispensable amount for each dispensing operation (Qs),
- determining a threshold number of dispensing operations (Nth) smaller than or equal to said maximum number of dispensing operations (Nmax),
- preventing actuation of said dispensing means (4) as soon as the number of actuation cycles of said dispensing means (4) reaches said threshold number of dispensing operations (Nth).

6. A method as claimed in claim 5, wherein:
- if said step of checking the detected product identifier (ID) has a negative result, then said method comprises the step of preventing actuation of said dispensing means (4),
- if said step of checking the detected product identifier (ID) has a positive result, then the detected product identifier (ID) is validly recognized and said method includes the step of enabling the actuation of said dispensing means until the number of actuation cycles of said dispensing means (4) equals said threshold number of dispensing operations (Nth).

7. A method as claimed in claim 6, wherein if said step of checking the detected product identifier (ID) has a negative result, then said method further comprises the step of generating an error signal.

8. A method as claimed in any claim from 5 to 7, wherein said method comprises the step of resetting a counter upon detection by the sensor means (10) of a product identifier (ID) validly checked by said control means (12) and of counting the number of actuation cycles of the dispensing means (4).

9. A method as claimed in claim 8, wherein said method comprises the step of generating an alarm signal when the number of actuation cycles of said dispensing means (4) is smaller than or equal to said threshold number of dispensing operations (Nth).
